# EUROPEAN PATENT SPECIFICATION

(11) **EP 2 091 807 B1**
(45) Date of publication and mention of the grant of the patent: **20.06.2012**
(21) Application number: 07852247.1
(22) Date of filing: 11.12.2007
(51) Int. Cl.: B62D 47/02, B60D 1/32, B62D 5/00, B62D 53/00

(54) **ARTICULATION CONTROL SYSTEM**
GELENKSTEUERSYSTEM
SYSTEME DE COMMANDE D'ARTICULATION

(30) Priority: 12.12.2006 SE 0602672
(43) Date of publication of application: 26.08.2009
(73) Proprietor: Scania CV AB (PUBL), 151 87 Södertälje (SE)
(72) Inventor: CROMNOW, Christer, 641 47 Katrineholm (SE); LYBERGER, Rickard, 155 31 Nykvarn (SE); RAMDÉN, Teresia, 152 40 Södertälje (SE)
(86) International application number: PCT/SE2007/050975
(87) International publication number: WO 2008/073045

(56) References cited:
- EP-A1- 0 233 850
- EP-A2- 0 234 414
- WO-A2-2005/101945
- DE-A1- 4 007 684
- DE-U1- 20 317 243
- DE-U1- 20 317 243
- US-A- 4 616 841
- US-A1- 2004 232 652
- US-A1- 2006 253 726
- US-B1- 6 422 584

## Description

### Field of the Invention

The present invention relates to an articulation control system for articulated vehicles according to the preamble of claim 1. The present invention also relates to an articulated vehicle according to claim 15.

### Background of the invention

EP0233850A1 discloses an articulation system according to the preamble of claim 1.

Long vehicles have a number of advantages, e.g., they allow higher load capacity as compared to shorter vehicles. A disadvantage, however, is that a long vehicle body requires a lot of space when, e.g., turning a corner. Therefore, long vehicles for urban use are often constructed as articulated vehicles. Examples of such vehicles are buses, articulated lorries and trailer trucks. The articulation facilitates accessibility in urban areas, while at the same time allowing the advantages of a long vehicle body, i.e., higher passenger capacity or loading (carrying) capacity.

The traditional transmission system for articulated vehicles employ a steered front axle and a transmission axle on the front vehicle body, e.g., a truck, and one or more axles located on the rear vehicle body, e.g., a trailer. A similarly functioning solution is common for articulated buses as well, in which case the engine and transmission is mounted underfloor between the steering axle and transmission axle of the front vehicle body, and wherein the front vehicle body pulls the rear vehicle body. Driving properties of such buses are typically similar to driving properties of a trailer truck.

Such a solution, however, imposes physical restraints that interfere with the desire to have, in particular regarding city buses, a construction resulting in as low flooring as possible to make boarding and disembarking quick and easy since it is difficult to achieve such low flooring due to the necessary space required for engine and transmission. Therefore, articulated buses often have the engine and transmission placed in the rear part of the rear body of the bus, i.e., behind the articulation. However, a solution wherein the front vehicle body is pushed by the rear vehicle body imposes driving properties that differ substantially from unarticulated vehicles and articulated vehicles having a front vehicle body acting as a puller.

For example, if the articulation joint can be rotated too freely, i.e., is too undamped, there is a risk that the rear body of the vehicle may throw out and push a middle axle, i.e., the rear axle of the front vehicle body, or a middle portion of the vehicle, sideways, in particular during winter conditions and otherwise slippery conditions. Further, if the articulation is too undamped during high speed operation, the vehicle may become unstable. On the other hand, if the articulation is too damped, the necessary rotation during, e.g., turning a corner, will be prevented and the vehicle will tend to continue straight ahead.

For these reasons, a number of articulation control systems have been disclosed, wherein the articulation is usually controlled by a damping mechanism for providing a suitable damping constant of the articulation depending on current driving conditions. Such damping mechanisms are usually electronically controlled, wherein the damping constant, e.g., is controlled based on parameters such as steering angle, current articulation angle, vehicle speed, articulation angle rate and articulation angle acceleration.

However, such electrically controlled damping systems are often incapable of allowing continued vehicle operation if the system is subject to a fault, and, consequently, there exists a need for an improved articulation damping system.

### Summary of the invention

It is an object of the present invention to provide an articulation control system that solves the above mentioned problems. This object is achieved by a system according to the characterizing portion of claim 1.

According to the present invention the articulation control system includes articulation means comprising first damping means and second damping means, wherein the system includes a first control unit for controlling said first damping means, and a second control unit, separate from said first control unit, for controlling said second damping means.

This has the advantage that if one of the control units malfunctions the other control unit can, using its associated damping means, maintain satisfying control of the articulation mechanism and thereby ensure a continued operation of the vehicle in a safe manner.

Further characteristics of the present invention, and advantages thereof, will be evident from the following detailed description of preferred embodiments and appended drawings, which are given by way of example only, and are not to be construed as limiting in any way.

### Brief description of the drawings

Fig. 1 shows an articulated vehicle at which the present invention may be employed.
Fig. 2 shows a damping mechanism for an articulation joint.
Fig. 3 schematically shows a damping mechanism control system according to the present invention.

### Detailed description of preferred embodiments

In the description and claims of the present invention, the phrase "front vehicle body" is to be interpreted as a vehicle body having at least a steering axle. Further, "rear vehicle body" is to be interpreted as a vehicle body having at least one rear axle, and wherein said rear vehicle body is arranged to be connectable to said front vehicle body using articulation means, i.e., a rotatable joint.

Further, in the description and claims the term control unit is to be interpreted as a unit comprising control logic capable of exchanging digital data with other control units.

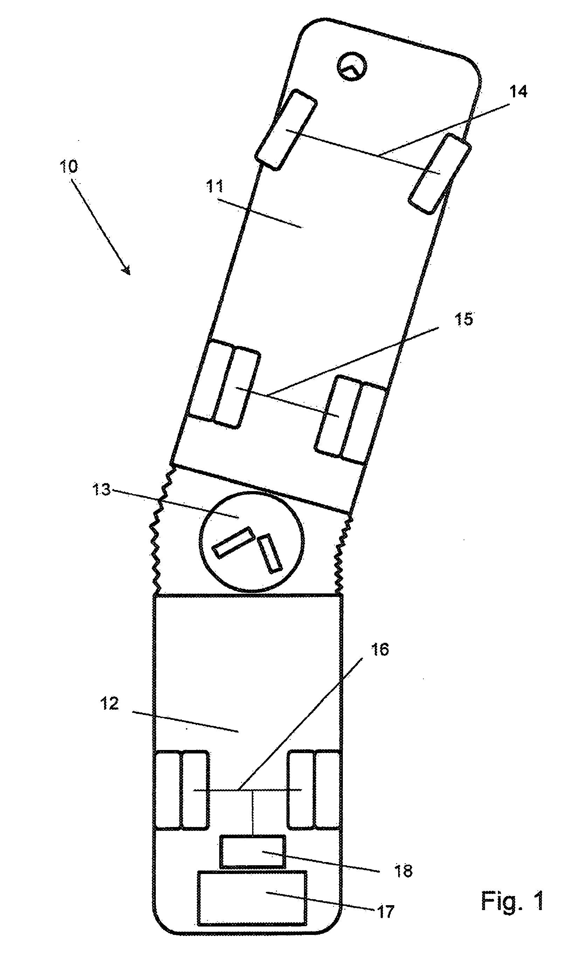

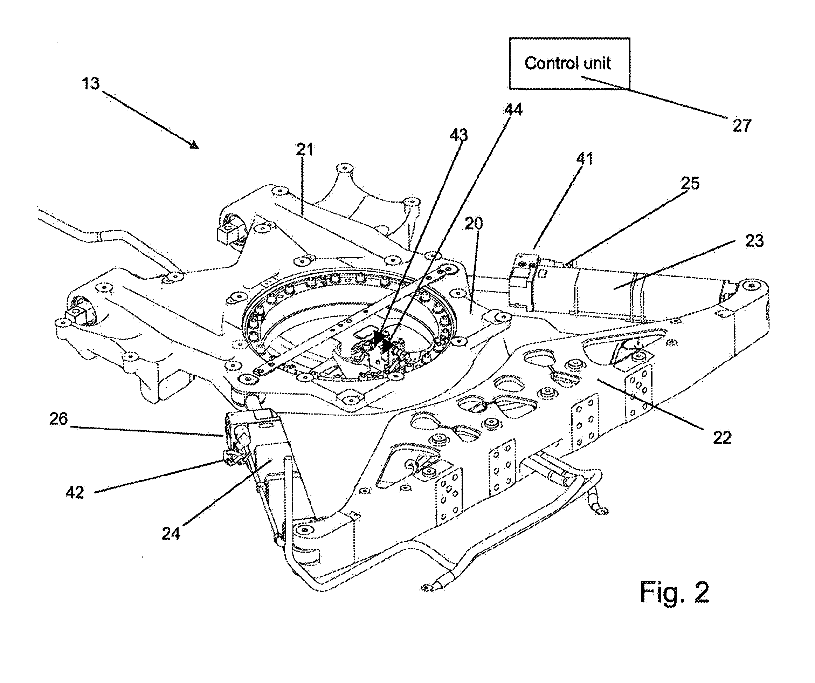

As has been stated above, articulated vehicles often have an increased capacity as compared to regular vehicles. Fig. 1 discloses an example of an articulated vehicle in the form of a bus 10 at which the present invention may advantageously be utilised. The bus 10 consists of a front vehicle body 11 and a rear vehicle body 12, wherein said front vehicle body 11 and said rear vehicle body 12 are coupled together using an articulation mechanism 13, which will be described more in detail below. The front vehicle body comprises a steering axle 14 (often called front axle or A axle) for steering the vehicle 10, and a second axle 15 (vehicle B axle or middle axle). The rear vehicle body comprises a transmission axle 16 (C axle or rear axle), which is powered by an engine 17 and gearbox 18 located at the end of the rear vehicle body 12. Consequently, the disclosed vehicle is of a pusher configuration wherein the front vehicle body 11 is pushed by the rear vehicle body 12. As was stated above, vehicles of pusher configuration impose driving properties that differ from vehicles having a puller configuration. These differences are compensated for using the articulation mechanism 13, which is disclosed more in detail in fig. 2. The articulation mechanism includes an articulation unit consisting of a turntable 20, which with one end 22 thereof is arranged to be rigidly fixed to the rear vehicle body 12, and with the other end 21 to be rigidly fixed to the front vehicle body 11. Had the disclosed turntable been used on an articulation vehicle of puller type, a freely rotating turntable in itself would provide a sufficient mechanism for allowing the necessary relative motion (rotation) between the front vehicle body 11 and the rear vehicle body 12. When used in a vehicle of pusher type, however, an undamped rotation of the turntable could cause vehicle jack-knifing when the roads are slippery or when the vehicle is turning a corner at high speed. Therefore, the disclosed articulation mechanism is provided with two damping means in the form of hydraulic damping cylinders 23, 24, which are used to provide a suitable and variable damping constant to dampen the relative motion of the front vehicle body and rear vehicle body with respect to each other. By varying the hydraulic pressure supplied to the cylinders 23, 24, the damping constant can be controlled and adjusted according to present driving conditions. For example, when the vehicle speed is less than or equal to 30km/h, and if the articulation angle is greater than or equal to, e.g., 7° in any direction and is not increasing, the hydraulic cylinders may be arranged to provide minimum damping so as to allow the articulation to properly straighten out (in this example, the vehicle is considered to be heading straight forward if the articulation angle is less than or equal to 7°. Naturally, this angle may be set to any suitable angle). Further, in the same situation, if it is detected that the articulation angle is increasing, the damping constant may immediately be increased to prevent vehicle jack-knifing.

If, on the other hand, vehicle speed is greater than 30 km/h, the damping constant may be increased in relation to vehicle speed regardless of articulation angle in order to prevent jack-knifing and/or unstable driving. The relation between damping constant and vehicle speed may, e.g., be linear (with the same or different derivative for different vehicle speed intervals) or exponential.

As was mentioned above, the damping constant is controlled by controlling the hydraulic pressure of the damping cylinders. The hydraulic pressure in turn, is controlled using an actuator, e.g., a current controlled proportional valve, wherein the resulting hydraulic pressure is dependent on the control current. As can be seen in the figure, each cylinder 23, 24 is controlled by a proportional valve 25, 26, respectively.

Further, a control unit 27 is used to determine proportional valve control currents based on prevailing driving conditions in order to ensure satisfactory driving properties at all times. The control unit 27 includes means for applying the determined current(s) to the proportional valves, e.g., by supplying the determined control current on an output connected to the proportional valve. The control unit is schematically shown in the figure, as its location usually is up to a designer of the vehicle. For example, the control unit 27 may be arranged on, or in the vicinity of, the turntable 20, or at a suitable location in any of the front vehicle body and rear vehicle body. The control unit 27 is connected to the vehicle data communication bus so as to enable communication with other vehicle control system units and receiving relevant data for enabling proper operation of the damping mechanism, i.e., determining suitable control currents. Such data may, e.g., consist of vehicle speed and/or rotational speed of one or more individual wheels and/or direction of travel. This data is normally communicated on the vehicle communication bus, and is therefore often available for the control unit 27 simply by listening to data communicated on said communication bus.

In the prior art, the two hydraulic cylinders are often arranged to work independently of each other. This has the advantage that should one of the cylinders malfunction, the other may provide sufficient damping to ensure continued operation, at least in as much that the vehicle can be driven to a service garage for repair in a safe manner.

There exists, however, a problem with the described solution. If the control unit 27 malfunctions or loses contact with the communication bus, control of the damping mechanism is lost altogether. In order to mitigate this problem, one or both of the damping cylinders may be provided with an emergency damping valve. Such an emergency valve often consists of a magnetic valve wherein, when voltage is applied, a controlled hydraulic pressure according to the above is supplied to the cylinder, while if the voltage is turned off, a predefined hydraulic pressure is supplied to the cylinder. Consequently, a pressure level capable of providing both satisfactory low-speed operation and at the same time satisfactory high-speed operation is required. In reality, however, it is difficult to determine a pressure that is low enough for low speeds and slippery conditions, and at the same time high enough to provide satisfactory high-speed conditions, and thereby it is also difficult to obtain a system having desired driving properties if the control unit 27 is malfunctioning.

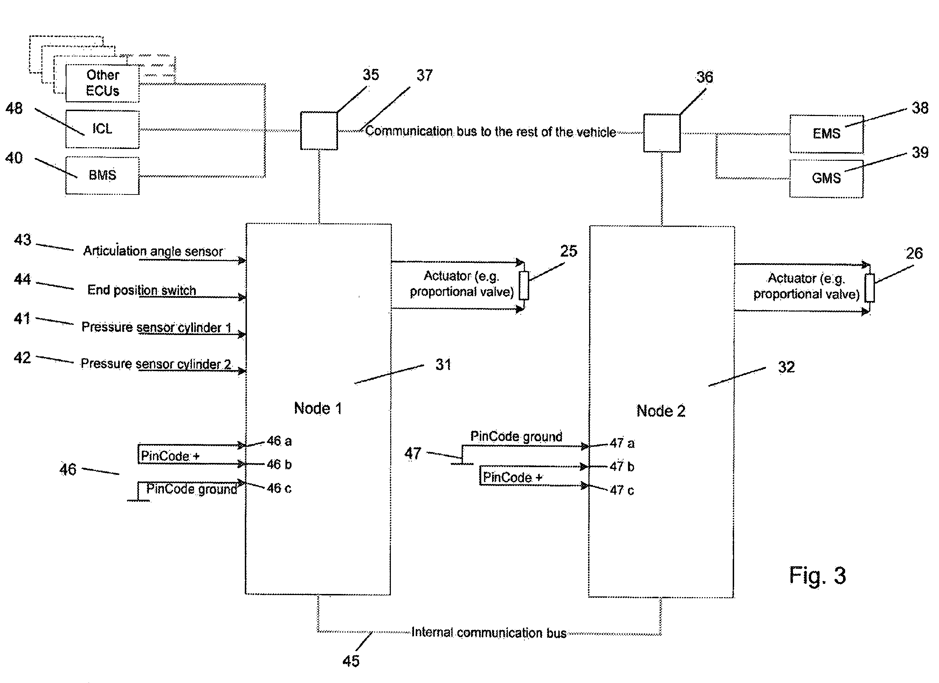

The present invention, however, provides a control logic that solves this problem. An example of control logic according to the present invention is disclosed in fig. 3, and as can be seen in the figure, two control units 31, 32 are used instead of only one. Each control unit 31, 32 controls one damping means actuator, such as proportional valves 25, 26 in fig. 2 for respectively controlling damping means such as a hydraulic cylinder as described above, i.e., each control unit 31, 32 includes means for applying the determined control current to its associated actuator, e.g., by supplying a determined control current on an output connected to the proportional valve 25, 26. Alternatively, the proportional valve may be voltage controlled, in which case a voltage is supplied instead. As a further alternative, the actuator may be provided with a digital signal representing a desired damping constant of the damping means, such as a hydraulic pressure. In such a solution, the actuator comprises means for converting the digital signal to a control signal, e.g., the actuator may convert the digital signal to a control current. Further, each control unit is individually connected to the vehicle communication bus 37 by means of connecting means 35, 36.

A vehicle of the above described kind may have only one communication bus to which all vehicle control units are connected, e.g., in a manner as disclosed in fig. 3. It is, however, common that the vehicle comprises a plurality of communication buses. E.g., the vehicle may include three communication buses, each having a number of control units connected thereto. The various vehicle control units may then be connected to the communication buses based on criticality, i.e. control units responsible for functions of low criticality may be connected to one communication bus, control units responsible for functions of semi-criticality may be connected to a second communication bus, and, correspondingly, control units responsible for functions of high criticality may be connected to a third communication bus. In such a system, the control units 31, 32 should be connected to the communication bus for functions of high criticality, since malfunction of the articulation damping mechanism may substantially affect the ability to drive the vehicle in a safe manner.

Functions of high criticality, the control units of which being connected to the third communication bus, if used, may, e.g., constitute an Engine Management System (EMS) 38, which controls the engine functions of the vehicle, a Gearbox Management System (GMS) 39, which controls the gearbox functions of the vehicle, and a Brake Management System (BMS) 40, which controls the brake functions of the vehicle.

The driver may be informed about an articulation control system breakdown/malfunction, e.g., by means of a display or warning lamp, and take necessary actions. The display/warning lamp is controlled by an instrument cluster control unit 48, which is informed about articulation system status via the vehicle communication bus 37.

The EMS 38 is preferably located in the rear vehicle body 12, e.g., attached to the vehicle engine. Further, also the GMS 39 is preferably located in the rear vehicle body, e.g., arranged on a panel in a suitable location of the rear vehicle body. The control units 40, 48 are preferably located in the front vehicle body. For example, these control units may be arranged on a common panel in a suitable location so as to allow easier assembling and easier service access. The control units 31, 32 may be located in close proximity to the damping mechanism, e.g. on, or in the vicinity of, the turntable. It is, however, also envisaged that the control units 31, 32 may be co-located on any of the above mentioned panels for the above reasons. Alternatively, the control units may be more separated from each other, e.g., one on each of the above mentioned panels, to reduce the risk of the control units suffering a common fault, as will be disclosed below.

During normal operation the control unit 31 is acting as a bus master and performs all communication on the communication bus regarding the articulation system. The control unit 32 is capable of communicating on the communication bus 37, but is only listening to ongoing communications when acting as a slave. The control units 31-32 preferably are provided with the same software, and in order to determine their relative hierarchy the control units each comprises a set of input pins 46a-c and 47a-c, respectively. By appropriately connecting these input pins to ground or a voltage source, the control units are "told" whether they should act as master or slave. As can be seen in the figure, the control unit 31 has pin 46c connected to ground and pins 46a-b connected to a voltage source, which, in this example, means that the control unit 31 is to act as bus master. Similarly, the control unit 32 has pin 47a connected to ground and pins 47b-c connected to a voltage source, which, correspondingly, means that the control unit 31 is to act as bus slave (should the control unit 32 detect that the control unit 31 is malfunctioning, it is capable of acting as bus master irrespective of current pin configuration, as will be disclosed below).

The control unit 31 further includes input means for receiving relevant sensor signals, such as pressure sensors 41, 42 of each hydraulic cylinder, at least one articulation angle sensor 43 for sensing the current articulation angle and for calculating the articulation speed, and at least one end position switch 44, i.e., a switch for detecting an end position of the articulation movement in either direction (one switch is enough for determining that a (any) end position is reached. If two switches are used, it is also possible to determine which of the two possible end positions that is reached) so that further articulation can be prevented by applying a high degree of damping in order to avoid vehicle damages. These input signals and calculated signals are then used, together with data received from the communication bus regarding, e.g., vehicle steering angle and vehicle speed to calculate appropriate control currents for the proportional valves. Other parameters, such as articulation angle acceleration may be taken into account as well. During normal operation the control unit 31 performs all calculations regarding the proportional valve control currents and communicates instructions to control unit 32 as to how it should control its associated proportional valve 26. The control unit 31 may also determine if the current vehicle speed is too high for the current articulation angle and vehicle direction and, if so, demand a reduction in engine power from the EMS 38 and/or suitable braking from the vehicle braking system (not shown).

The communication between the control units 31, 32 can be carried out using the vehicle communication bus 37, but in the disclosed example an additional dedicated communication bus 45 is, at least during normal operation, solely used for communication between the control units 31, 32. This has the advantage that the vehicle communication bus is not unnecessarily loaded. The dedicated communication bus 45 can also be used by the communication units 31, 32 to verify proper operation of the other communication unit. The bus 45 may advantageously consist of a CAN bus, but may also consist of any suitable bus interface, or a wireless link according to a suitable wireless communication protocol. The communication bus 45 also has the advantage that if, e.g., the control unit 31 loses contact with the communication bus 37 it can continue to communicate on the bus 37 by using bus 45 and control unit 32. Further, if the bus 37 for any reason should malfunction at a point somewhere between the connecting means 35, 36 the bus 45 can be used as an emergency communication line for communication between front vehicle body systems and rear vehicle body systems.

Since one of the control units 31, 32 are working as bus master and the other as slave, the control units 31, 32 can be provided with the same source address, i.e., act as a single control unit as far as the rest of the vehicle control system is concerned. The control units may include means for determining if the other control unit malfunctions. This has the advantage that if, e.g., the control unit 32 detects that the control unit 31 malfunctions, it may immediately take on the bus master role irrespective of the pin configuration according to the above to ensure a continued operation of the articulation mechanism. The control unit 32 may, e.g., determine that the control unit 31 malfunctions by determining that the control unit 31 stops communicating on either or both of the communication buses 37 and 45.

The present invention has the advantage that if one of the control units 31, 32 is subject to a fault, it is still possible to control the articulation mechanism, at least to some extent, using the other control unit. If the damping cylinders are of a sufficient dimension, it is possible to maintain normal, or almost normal, driving conditions using the remaining cylinder. Consequently, this also enables that normal, or almost normal operation can be maintained in a situation wherein both control units are functioning properly but one of the damping cylinders is malfunctioning, since in this case the responsible control unit can alert the other on this matter. For example, if the damping cylinder of control unit 31 should malfunction, the control unit 31 can still perform necessary calculations and request proper control from control unit 32. Should the control unit 31 malfunction it is still possible for the control unit 32 to perform a reduced operation (due to the lack of input signals from sensors 41-44) based on vehicle speed and direction. For example, about 50% of available engine power may be utilised for driving in such a situation, thereby ensuring safe transport to a service garage.

In the above description only control unit 31 has been provided with means for receiving sensor signals. It is also possible that both control units are provided with means for receiving the described sensor signals, whereby also control unit 32 may perform more qualified calculations according to the above if control unit 31 malfunctions. Even further, one or both control units may be arranged to control both damping cylinders. In such a solution the system may maintain normal operation even if one of the control units malfunctions.

The articulation system construction may be even more fail-safe if the units have separate fuses and separate grounding to reduce the risk of malfunction due to a ground fault.

Although the present invention has been described in connection to a bus above, it is to be understood that the present invention is applicable in any kind of articulated vehicles, in particular vehicles of pusher kind. Further, in the above description the damping means consist of hydraulic cylinders. Naturally, the present invention is equally suitable for use with articulation units wherein the damping means consist of other kinds of devices as long as a control unit may be used to control said damping means. Such damping means may, if capable of providing sufficient damping force, consist of, e.g., pneumatic cylinders or electric motor operated cylinders. Even further, even though the present invention has been described as a system involving two control units, it is also possible to have a system with additional control units, e.g., tree or four to provide added redundancy, in which case the additional control unit(s) may be arranged to take over functions of one or both of said control units at the occurrence of a malfunction.

## Claims

1. Articulation control system for use with an articulated vehicle (10) having a front vehicle body (11) and a rear vehicle body (12), said front and rear vehicle bodies (11, 12) being arranged to be connected together by articulation means (13) comprising first damping means and second damping means for providing relative rotation relative to each other, said system comprising control means for controlling said rotation by controlling said first damping means and said second damping means,
**characterised in that** the system includes:
- a first control unit (31), including means for controlling said first damping means, and
- a second control unit (32), separate from said first control unit (31), and including means for controlling said second damping means.

2. System according to claim 1, **characterised in that** said control units (31, 32) include control logic capable of exchanging digital data with each other and/or other control units.

3. System according to claim 1 or 2, **characterised in that** said means consist of means for providing a control signal to said damping means.

4. System according to claim 1, wherein at least one of said first and second control unit (31, 32) includes means for controlling both said first damping means and said second damping means.

5. System according to claim 1, wherein said first control unit (31) and said second control unit (32) are arranged to be interconnected by means of a dedicated data communication link (45).

6. System according to any of the claims 1-5, **characterised in that** said first control unit (31) is arranged to be connected to a vehicle communication bus (37) using first connecting means (35), and wherein said second control unit (32) is arranged to be connected to the vehicle communication bus (37) using second connecting means (36), separate from said first connecting means (35).

7. System according to claim 5, wherein said first control unit (31) is arranged to function as a bus master with regard to communication on said vehicle communication bus, and wherein said second control unit (32) is arranged to function as bus slave.

8. System according to claim 7, wherein said second control unit (32) includes means for determining if said first control unit malfunctions, and means for functioning as a bus master when said first control unit (31) malfunctions.

9. System according to any of the preceding claims, **characterised in that** one or both of said control units (31, 32) includes means for receiving sensor signals.

10. System according to claim 9, wherein said sensor signals consist of signals from one or more sensors from the group: articulation angle sensor, damping pressure sensor, vehicle speed sensor, wheel rotation sensor, steering angle sensor, articulation end position sensor.

11. System according to any of the preceding claims, wherein a transmission axle (16) of said articulated vehicle (10) is arranged on said rear vehicle body (12).

12. System according to any of the preceding claims, wherein said first and second damping means, respectively, consists of any from the group: hydraulic cylinder, pneumatic cylinder, electric motor operated cylinder.

13. System according to claim 1, wherein said damping means consist of hydraulic cylinders, and wherein said control units are arranged to control said hydraulic cylinders by controlling at least one hydraulic cylinder actuation valve.

14. System according to any of the claims 1-13, **characterised in that** each of said first and second damping means are dimensioned such that sufficient damping of said articulation unit can be individually accomplished by any of said damping means.

15. Articulated vehicle (10), **characterised in that** it includes an articulation control system according to any of the claims 1-14.

## Patentansprüche

1. Gelenksteuersystem zur Verwendung mit einem Gelenkfahrzeug (10), das einen vorderen Fahrzeugkörper (11) und einen hinteren Fahrzeugkörper (12) aufweist, wobei der vordere und hintere Fahrzeugkörper (11, 12) dazu eingerichtet sind, um durch eine Gelenkeinrichtung (13) miteinander verbunden zu werden, die eine erste Dämpfungseinrichtung und eine zweite Dämpfungseinrichtung umfasst, um eine relative Drehung relativ zueinander vorzusehen, wobei das System eine Steuereinrichtung zum Steuern der Drehung durch Steuern der ersten Dämpfungseinrichtung und der zweiten Dämpfungseinrichtung umfasst,
**dadurch gekennzeichnet, dass** das System umfasst:
- eine erste Steuereinheit (31), die eine Einrichtung zum Steuern der ersten Dämpfungseinrichtung umfasst, und
- eine zweite Steuereinheit (32), die separat von der ersten Steuereinheit (31) ist und die eine Einrichtung zum Steuern der zweiten Dämpfungseinrichtung umfasst.

2. System nach Anspruch 1,
**dadurch gekennzeichnet, dass** die Steuereinheiten (31, 32) eine Steuerlogik umfassen, so dass sie in der Lage sind, digitale Daten miteinander und/oder anderen Steuereinheiten auszutauschen.

3. System nach Anspruch 1 und 2,
**dadurch gekennzeichnet, dass** die Einrichtung aus einer Einrichtung zum Bereitstellen eines Steuersignals an die Dämpfungseinrichtung besteht.

4. System nach Anspruch 1,
wobei zumindest eine der ersten und zweiten Steuereinheit (31, 32) eine Einrichtung zum Steuern sowohl der ersten Dämpfungseinrichtung als auch der zweiten Dämpfungseinrichtung umfasst.

5. System nach Anspruch 1,
wobei die erste Steuereinheit (31) und die zweite Steuereinheit (32) eingerichtet sind, um miteinander mittels einer dedizierten Datenkommunikationsanbindung (45) verbunden zu werden.

6. System nach zumindest einem der Ansprüche 1 bis 5,
**dadurch gekennzeichnet, dass** die erste Steuereinheit (31) eingerichtet ist, um mit einem Fahrzeugkommunikationsbus (37) unter Verwendung einer ersten Verbindungseinrichtung (35) verbunden zu werden, und wobei die zweite Steuereinheit (32) eingerichtet ist, um mit dem Fahrzeugkommunikationsbus (37) unter Verwendung einer zweiten Verbindungseinrichtung (36), die von der ersten Verbindungseinrichtung (35) separat ist, verbunden zu werden.

7. System nach Anspruch 5,
wobei die erste Steuereinheit (31) eingerichtet ist, um als ein Bus-Master hinsichtlich der Kommunikation auf dem Fahrzeugkommunikationsbus zu fungieren, und wobei die zweite Steuereinheit (32) eingerichtet ist, um als Bus-Slave zu fungieren.

8. System nach Anspruch 7,
wobei die zweite Steuereinheit (32) eine Einrichtung zum Bestimmen, ob die erste Steuereinheit eine Fehlfunktion aufweist, und eine Einrichtung umfasst, um als ein Bus-Master zu fungieren, wenn die erste Steuereinheit (31) eine Fehlfunktion aufweist.

9. System nach zumindest einem der vorstehenden Ansprüche,
**dadurch gekennzeichnet, dass** eine oder beide der Steuereinheiten (31, 32) eine Einrichtung zum Empfangen von Sensorsignalen umfasst oder umfassen.

10. System nach Anspruch 9,
wobei die Sensorsignale aus Signalen aus einem oder mehreren Sensoren aus der Gruppe bestehen: Gelenkwinkelsensor, Dämpfungsdrucksensor, Fahrzeuggeschwindigkeitssensor, Raddrehsensor, Lenkwinkelsensor und Gelenkendpositionssensor.

11. System nach zumindest einem der vorhergehenden Ansprüche,
wobei eine Getriebeachse (16) des Gelenkfahrzeugs (10) auf dem hinteren Fahrzeugkörper (12) angeordnet ist.

12. System nach zumindest einem der vorstehenden Ansprüche,
wobei die erste beziehungsweise zweite Dämpfungseinrichtung aus irgendeinem der Gruppe besteht: hydraulischer Zylinder, pneumatischer Zylinder und elektromotorbetriebener Zylinder.

13. System nach Anspruch 1,
wobei die Dämpfungseinrichtung aus hydraulischen Zylindern besteht, und wobei die Steuereinheiten eingerichtet sind, um die hydraulischen Zylinder durch Steuern zumindest eines Hydraulikzylinderstellventils zu steuern.

14. System nach zumindest einem der Ansprüche 1 bis 13,
**dadurch gekennzeichnet, dass** jede der ersten und zweiten Dämpfungseinrichtung derart ausgelegt ist, dass eine hinreichende Dämpfung der Gelenkeinheit individuell durch irgendeine der Dämpfungseinrichtungen erreicht werden kann.

15. Gelenkfahrzeug (10),
**dadurch gekennzeichnet, dass** es ein Gelenksteuersystem gemäß zumindest einem der Ansprüche 1 bis 14 umfasst.

## Revendications

1. Système de commande d'articulation destiné à être utilisé avec un véhicule articulé (10) comportant une caisse de véhicule avant (11) et une caisse de véhicule arrière (12), lesdites caisses de véhicule avant et arrière (11, 12) étant configurées de façon à être reliées l'une à l'autre par des moyens d'articulation (13) comprenant des premiers moyens d'amortissement et des deuxièmes moyens d'amortissement pour produire une rotation relative les uns par rapport aux autres, ledit système comprenant des moyens de commande pour commander ladite rotation par la commande desdits premiers moyens d'amortissement et desdits deuxièmes moyens d'amortissement, **caractérisé en ce que** le système comprend :
- une première unité de commande (31), comprenant des moyens pour commander lesdits premiers moyens d'amortissement, et
- une deuxième unité de commande (32), séparée de ladite première unité de commande (31), et comprenant des moyens pour commander lesdits deuxièmes moyens d'amortissement.

2. Système selon la revendication 1, **caractérisé en ce que** lesdites unités de commande (31, 32) comprennent une logique de commande susceptible d'échanger des données numériques, entre elles et/ou avec d'autres unités de commande.

3. Système selon la revendication 1 ou 2, **caractérisé en ce que** lesdits moyens sont constitués par des moyens pour délivrer un signal de commande auxdits moyens d'amortissement.

4. Système selon la revendication 1, dans lequel au moins l'une desdites première et deuxième unités de commande (31, 32) comprend des moyens pour commander tout à la fois lesdits premiers moyens d'amortissement et lesdits deuxièmes moyens d'amortissement.

5. Système selon la revendication 1, dans lequel ladite première unité de commande (31) et ladite deuxième unité de commande (32) sont configurées de façon à être interconnectées à l'aide d'une liaison de communication de données spécialisée (45).

6. Système selon l'une quelconque des revendications 1 à 5, **caractérisé en ce que** ladite première unité de commande (31) est configurée de façon à être connectée à un bus de communication de véhicule (37) à l'aide de premiers moyens de connexion (35), et ladite deuxième unité de commande (32) étant configurée de façon à être connectée au bus de communication de véhicule (37) à l'aide de deuxièmes moyens de connexion (36), séparés desdits premiers moyens de connexion (35).

7. Système selon la revendication 5, dans lequel ladite première unité de commande (31) est configurée de façon à fonctionner en maître de bus vis-à-vis de la communication sur ledit bus de communication de véhicule, et dans lequel ladite deuxième unité de commande (32) est configurée de façon à fonctionner en esclave de bus.

8. Système selon la revendication 7, dans lequel ladite deuxième unité de commande (32) comprend des moyens pour déterminer si ladite première unité de commande fonctionne mal, et des moyens pour fonctionner en maître de bus lorsque ladite première unité de commande (31) fonctionne mal.

9. Système selon l'une quelconque des revendications précédentes, **caractérisé en ce que** l'une ou les deux desdites unités de commande (31, 32) comprennent des moyens pour recevoir des signaux de capteur.

10. Système selon la revendication 9, dans lequel lesdits signaux de capteur sont constitués par des signaux venant d'un ou de plusieurs capteurs parmi le groupe : capteur d'angle d'articulation, capteur de pression d'amortissement, capteur de vitesse de véhicule, capteur de rotation de roue, capteur d'angle de direction, capteur de fin de position d'articulation.

11. Système selon l'une quelconque des revendications précédentes, dans lequel un essieu de transmission (16) dudit véhicule articulé (10) est agencé sur ladite caisse de véhicule arrière (12).

12. Système selon l'une quelconque des revendications précédentes, dans lequel lesdits premiers et deuxièmes moyens d'amortissement, respectivement, sont constitués par n'importe lesquels parmi le groupe :
cylindre hydraulique, cylindre pneumatique, cylindre actionné par un moteur électrique.

13. Système selon la revendication 1, dans lequel lesdits moyens d'amortissement sont constitués par des cylindres hydrauliques, et dans lequel lesdites unités de commande sont configurées de façon à commander lesdits cylindres hydrauliques par la commande d'au moins une vanne d'actionnement de cylindres hydrauliques.

14. Système selon l'une quelconque des revendications 1 à 13, **caractérisé en ce que** chacun desdits premiers et deuxièmes moyens d'amortissement sont dimensionnés de telle sorte qu'un amortissement suffisant de ladite unité d'articulation puisse être accompli individuellement par n'importe lesquels desdits moyens d'amortissement.

15. Véhicule articulé (10), **caractérisé en ce qu'**il comprend un système de commande d'articulation selon l'une quelconque des revendications 1 à 14.
